# EUROPEAN PATENT APPLICATION

(11) **EP 4 604 373 A1**
(43) Date of publication of application: **20.08.2025**
(21) Application number: 25157769.8
(22) Date of filing: 13.02.2025
(51) Int. Cl.: H02M 1/00, H02M 7/219, H02M 7/5387, H02M 7/797

(54) **BI-DIRECTIONAL POWER CONVERTER UTILIZING MOSFET SWITCHING ELEMENTS**

(30) Priority: 13.02.2024 US 202418440150
(71) Applicant: Hamilton Sundstrand Corporation, Charlotte, NC 28217-4578 (US)
(72) Inventor: SCHMITT, Dwight D., Rockford, 61108 (US); KHERALUWALA, Mustansir H., Richmond, 77407 (US)
(74) Representative: Dehns

(57) **Abstract**

A power converter assembly includes a power converter (400), a sensor (410a, 410b, 410c) and a controller (240). The converter (400) includes an alternating current, AC, port (404) and a direct current, DC, port (406), wherein the AC port (404) is configured to receive AC power and the DC port (406) is configured to output DC power. The power converter (400) also includes a plurality of MOSFET switches (SM1-SM6) that include a body diode (BD1-BD6) coupled between the AC port (404) and the DC port (406). The controller (240) is connected to the sensor (410a, 410b, 410c) and configured to drive gates of the plurality of MOSFET switches (SM1-SM6). The controller (240) can determine that current through the body diode (BD1) of a first switch (SM1) of the plurality of MOSFET switches (SM1-SM6) exceeds the threshold and then command a gate of the first switch (BD1) to allow conduction through a conduction region and disallow conduction when the current falls.

## Description

### BACKGROUND

Exemplary embodiments of the present disclosure pertain to the art of power converters and in particular, to power converters that utilize MOSFET switch elements.

There are many applications where inverter/rectifier conversion systems (converters) are employed to provide bi-directional power flow between systems. For example, in systems that contain both alternating current (AC) and direct current (DC) portions, such converters allow for converting AC to DC and DC to AC.

An example of such a system includes a generator/motor. In a generator mode, a mechanical rotating system (prime mover, e.g. gas turbine/engine) is used to drive the generator/motor such that it produces, for example, a three phase AC voltage output. The converter will act as a rectifier to convert the AC voltage to a DC voltage. In some cases, a passive diode-based system can perform such a conversion and allows for driving DC loads.

In other situations, the generator/motor can be used to drive the prime mover to, for example, start the prime mover. In such cases, the converter may act as inverter that converts a DC voltage into AC voltage (e.g., three phase) that can be used to drive the generator/motor. Such systems can employ, for example, switches that are controlled in a known manner. It will be understood, however, that to operate in both modes, both switches and diodes will be required.

### BRIEF DESCRIPTION

According to a first aspect of the invention there is provided a power converter assembly. The assembly includes a power converter that includes an alternating current (AC) port and a direct current (DC) port. The AC port is configured to receive AC power and the DC port is configured to output DC power. The power converter includes: a plurality of MOSFET switches that include a body diode coupled between the AC port and the DC port; a first phase sensor configured to sense a current through a phase of the AC power provided at the AC port; and a controller connected to the first phase sensor and configured to drive gates of the plurality of MOSFET switches. The controller is further configured to: determine that current through the body diode of a first switch of the plurality of MOSFET switches exceeds a threshold; after determining that current through the body diode of a first switch of the plurality of MOSFET switches exceeds the threshold, command a gate of the first switch to allow conduction through a conduction region of the first switch; determine that current through the first switch has fallen below the threshold; and command the gate of the first switch to cease conduction through the conduction region of the first switch.

In addition to one or more of the features described above, or as an alternative to any of the foregoing embodiments, determining that current through the body diode of the first switch exceeds the threshold can be based on current measured by the first phase sensor.

In addition to one or more of the features described above, or as an alternative to any of the foregoing embodiments, the controller can further be configured to: determine that current through the body diode of a second switch of the plurality of MOSFET switches is below a negative threshold; after determining that current through the body diode of a second switch of the plurality of MOSFET switches is below the negative threshold, command a gate of the second switch to allow conduction through a conduction region of the second switch; determine that current through the second switch has risen above the negative threshold; and command the gate of the second switch to cease conduction through the conduction region of the second switch.

In addition to one or more of the features described above, or as an alternative to any of the foregoing embodiments, the first and second switches can be connected in series across the DC port.

In addition to one or more of the features described above, or as an alternative to any of the foregoing embodiments, the first and second MOSFETs (or any other MOSFETS) can be SiC MOSFETs.

In addition to one or more of the features described above, or as an alternative to any of the foregoing embodiments, the plurality of MOSFET switches can include third and fourth switches and the controller can further be configured to: determine that current through the body diode of a third switch exceeds the threshold; after determining that current through the body diode of a third switch exceeds the threshold, command a gate of the third switch to allow conduction through a conduction region of the third switch; determine that current through the third switch has fallen below the threshold; and command the gate of the third switch to cease conduction through the conduction region of the third switch.

In addition to one or more of the features described above, or as an alternative to any of the foregoing embodiments, the controller can further be configured to: determine that current through the body diode of the fourth switch is below the negative threshold; after determining current through the body diode of the fourth switch is below the negative threshold, command a gate of the fourth switch to allow conduction through a conduction region of the fourth switch; determine that current through the fourth switch has risen above the negative threshold; and command the gate of the fourth switch to cease conduction through the conduction region of the fourth switch.

In addition to one or more of the features described above, or as an alternative to any of the foregoing embodiments, the third and fourth switches can be connected in series across the DC port and can both be SiC MOSFETs.

In addition to one or more of the features described above, or as an alternative to any of the foregoing embodiments, the threshold can be I₁ and the negative threshold can be -I₁.

According to a second aspect of the invention there is provided a method of converting AC power to DC power with a power converter assembly. The method includes: receiving alternating current (AC) power at an AC port of a power converter; sensing current with first phase sensor a phase of the AC power provided at the AC port; based on the sensed current, causing a plurality of MOSFET switches that include a body diode to be switched off and on to convert the AC power to DC power. Causing can include: determining that current through the body diode of a first switch of the plurality of MOSFET switches exceeds a threshold; after determining that current through the body diode of a first switch of the plurality of MOSFET switches exceeds the threshold, commanding a gate of the first switch to allow conduction through a conduction region of the first switch; determining that current through the first switch has fallen below the threshold; and commanding the gate of the first switch to cease conduction through the conduction region of the first switch.

In addition to one or more of the features described above, or as an alternative to any of the foregoing embodiments, determining that current through the body diode of the first switch exceeds the threshold can be based on current measured by the first phase sensor.

In addition to one or more of the features described above, or as an alternative to any of the foregoing embodiments, the method can further include: determining that a current through the body diode of a second switch of the plurality of MOSFET switches is less than a negative threshold; after determining that current through the body diode of a second switch of the plurality of MOSFET switches is less than a negative threshold, commanding a gate of the second switch to allow conduction through a conduction region of the second switch; determining that current through the second switch has risen above the negative threshold; and commanding the gate of the second switch to cease conduction through the conduction region of the second switch.

In addition to one or more of the features described above, or as an alternative to any of the foregoing embodiments, the first and second switches can be connected in series across the DC port.

In addition to one or more of the features described above, or as an alternative to any of the foregoing embodiments, in the method, the plurality of MOSFET switches can include third and fourth switches and the method can further include: determining that current through the body diode of a third switch exceeds the threshold; after determining that current through the body diode of a third switch exceeds the threshold, command a gate of the third switch to allow conduction through a conduction region of the third switch; determining that current through the third switch has fallen below the threshold; and commanding the gate of the third switch to cease conduction through the conduction region of the third switch.

In addition to one or more of the features described above, or as an alternative to any of the foregoing embodiments, the method can further include: determining that a current through the body diode of the fourth switch is less than a negative threshold; after determining current through the body diode of the fourth switch is less than the negative threshold, commanding a gate of the fourth switch to allow conduction through a conduction region of the fourth switch; determining that current through the fourth switch has risen above the negative threshold; and commanding the gate of the fourth switch to cease conduction through the conduction region of the fourth switch.

In addition to one or more of the features described above, or as an alternative to any of the foregoing method embodiments, the first and second MOSFETs can be SiC MOSFETs.

In addition to one or more of the features described above, or as an alternative to any of the foregoing method embodiments, the third and fourth switches can be connected in series across the DC port and can be SiC MOSFETs.

In addition to one or more of the features described above, or as an alternative to any of the foregoing method embodiments, the threshold can be I₁ and the negative threshold can be -I₁.

### BRIEF DESCRIPTION OF THE DRAWINGS

The following descriptions should not be considered limiting in any way. With reference to the accompanying drawings, like elements are numbered alike:
FIG. 1 is diagram of a power converter acting as a rectifier;
FIG. 2 is diagram of a power converter acting as an inverter;
FIGs. 3A and 3B show diagrams of n-type and p-type MOSFETS that include body diodes;
FIG. 4 is diagram of a bi-directional power converter;
FIG. 5 shows graphs of diode current versus gate voltage for a MOSFET in FIG. 4 operating in a third quadrant; and
FIG. 6 shows graphs of switch current versus gate voltage for a MOSFET in FIG. 4 operating in a third quadrant;

### DETAILED DESCRIPTION

A detailed description of one or more embodiments of the disclosed apparatus and method are presented herein by way of exemplification and not limitation with reference to the Figures.

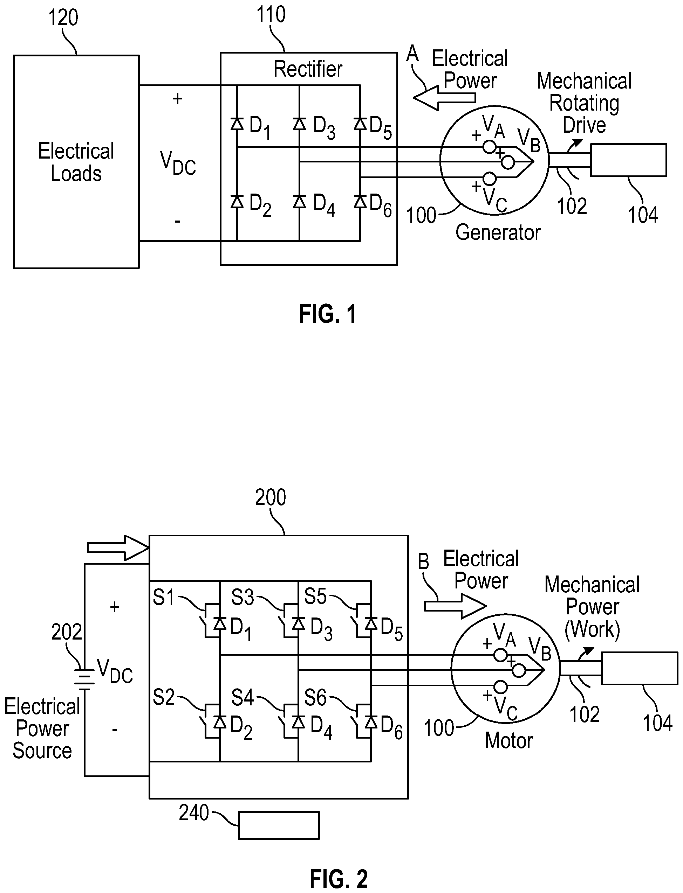

As noted above, in order to provide for bi-direction conversion from AC to DC and from DC to AC many elements are required. For example, as shown in FIG. 1, in a generate (or generating) mode, a motor/generator 100 can be driven by a shaft 102. The shaft 102 can be connected to a prime mover 104 (e.g,. a turbine engine). Rotation of the generator 100 creates AC power. In this example, the power is three-phase power and flow in the direction of arrow A. The AC power is converted by a power converter 110 from AC to DC. In the illustrated embodiment, the converter is diode or passive rectifier that includes diodes D1-D6. The output of the power converter 110 is a DC voltage Vdc and can be provided to loads 120. It is noted that the loads 120 can include storage device such as a battery in one embodiment.

For example, as shown in FIG. 2, in a motor (or motoring) mode, a motor/generator 100 can be used to drive the shaft 102. It should be noted that the motor/generator 100 can be referred to as a generator while in generating mode and a motor while in motoring mode from time to time herein.

The shaft 102 can be connected to the prime mover 104 (e.g,. a turbine engine) as before. When power is supplied to the motor 100 causes the shaft 102 to turn and to power the prime mover 104. This can be useful, for example, in starting the prime mover.

DC power can be provided by a DC power source 202. The power from the DC power source is converted to AC power by the converter 200. To pass power in the direction shown by arrow B, the converter 200 includes a plurality of switches S1-S6. These switches can be opened/closed by a controller 240 to cause the converter to act as an inverter. The exact nature of how the controller 240 operates can be modified depending on the application. Application of the AC power created by the converter 200 causes the motor 100 to rotate the shaft 102 to provide rotational energy to the prime mover 104.

As illustrated in FIG. 2, the switches S1-S6 are connected in parallel with corresponding diodes D1-D6. As will be understood, the switches are operated as discussed above to provide power from the source 202 to the motor/generator 100. Additionally, when the prime mover 104 is operating, the switches S1-S6 can be opened and the converter 200 will pass power through the diodes D1-D6 and operate as in FIG. 1 to provide power to the loads 120. Thus, the converter 200 of FIG. 2 is bidirectional and can pass power in both directions A (FIG. 1) and B (FIG. 2).

Typical systems utilizing bi-direction converter 200 employ insulated-gate bipolar transistors (IGBT) as the switches S1-S6 and the diodes D1-D6 are connected in a reverse parallel configuration as shown in FIG. 2. As will be clear from above description, in generate mode, switch modulation/control is not required, and the normal practice is to leave all switches OFF and rely on the diodes, D1-D6 to achieve full-wave three phase rectification. With this passive mode (no switching) no special ON/OFF controls or system state sensing is required.

Recent state of the art for power modules are transitioning from Silicon IGBTs to MOSFET switches which, unlike IGBTs, can conduct full rated current in the negative direction when ON (e.g., closed). An example of such a MOSFET is a silicon carbide (SiC) MOSFET. Such SiC devices offer greatly reduced switching losses and can allow the switching frequencies to increase beyond 20 kHz (typical limit for IGBT devices).

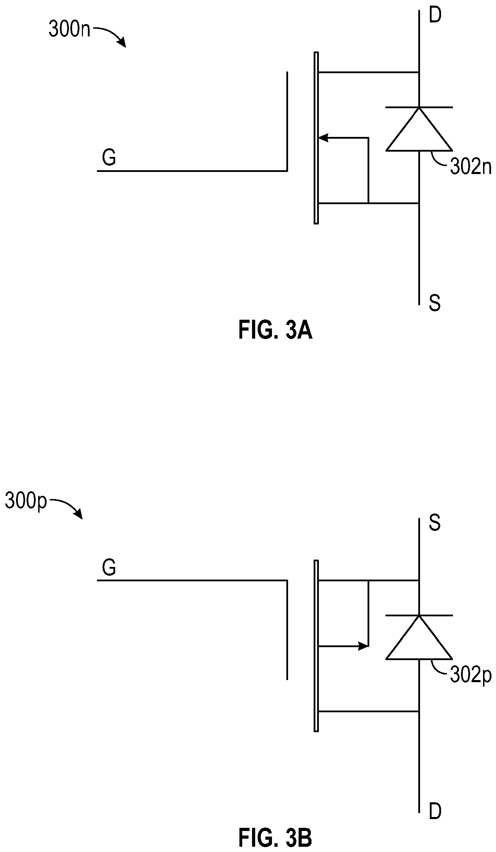

Unlike IGBTs, MOSFETs typically incorporate a reverse diode to provide a fast reverse current conduction path in switching operation. Example of MOSFETs are shown in FIGs. 3A and 3B by way of example only. As is known in the art, MOSFETS include sources (S), drains (D) and gates (G). The MOSFET of FIG. 3A is a n-channel MOSFET and FIG. 3B is a p-channel MOSFET. Both include so-called body diodes 302n, 302p respectively. In the following discussion, the MOSFETS can be either p or n channel and the control of their gates can be controlled accordingly.

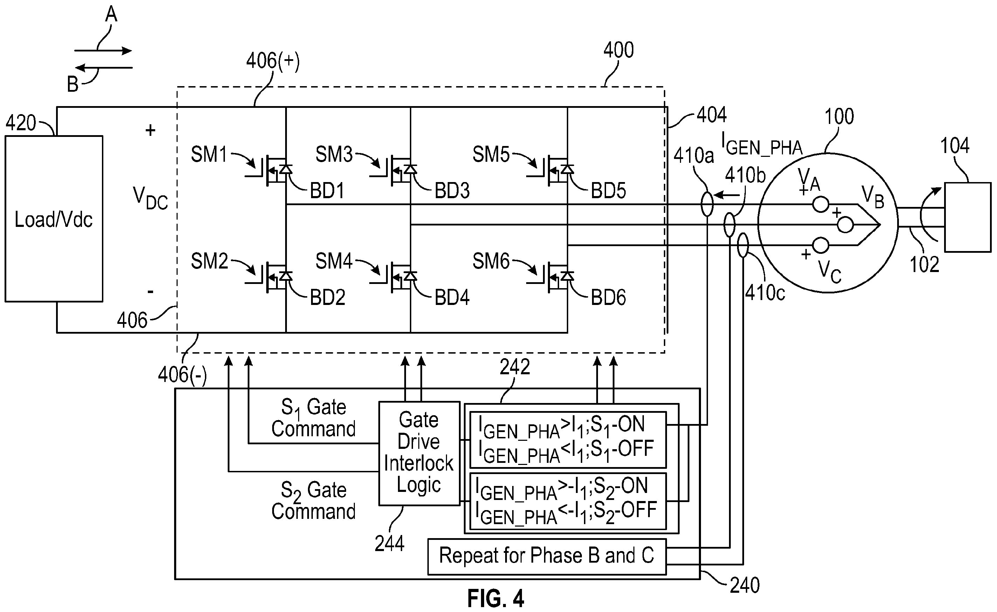

FIG. 4 an example bi-direction power converter 400 is shown. The converter 400 includes switches SM1-SM6 that are implemented as MOSFET switching elements. In one embodiment, switches SM1-SM6 are SiC MOSFET devices.

The converter 400 includes an AC port 404 that can receive/output an AC power. As shown, the AC port is configured for connection to three or more generator phases produced by motor/generator 100 when operating in the generator mode. The phases are indicated as phases A, B and C which respectively produce V_{A}, V_{B}, and V_{C}. The converter also includes a DC port 406 that can receive/output DC power.

In the generating mode, the converter 400 receives AC power at the AC port 404 and converts it to DC power and provides the DC power to the DC port 406. In the motoring mode, the converter 400 receives DC power at the DC port, converts it to AC power and provides the AC power to the AC port 404. The DC power port can be connected to either or both a load and a power supply as indicated by block 420.

The DC input includes positive and negative rails 406(+) and 406(-). The converter 400 includes six or more switches SM1-SM6. Each phase includes at least two switches connected to it. As shown, these switches are connected in series between the positive and negative rails 406(+) and 406(-) and the phase is connected to a point between the switches. For example, switches SM1/SM2 are serially connected between the positive and negative rails 406(+) and 406(-) and phase A is connected to point between them. Similarly, switches SM3/SM4 are serially connected between the positive and negative rails 406(+) and 406(-) and phase B is connected to point between them and switches SM5/SM6 are serially connected between the positive and negative rails 406(+) and 406(-) and phase C is connected to point between them.

In general, in the motoring mode the load/Vdc block 420 will produce an output voltage of V_{DC}. The converter 400 can be operated as discussed above where the gates of the switches SM1-SM6 are operated by the controller 240 such that V_{DC} is converted to an AC voltage and provided to the AC port. In the example of FIG. 4, the controller 240 can operate the converter 400 such that V_{DC} is converted to a three-phase AC voltage (phases A-C) so that power flows in direction A and causes the motor/generator 100 to operate as motor and drive the shaft 102 to provide rotational energy to the prime mover 104. The primary conduction path is through the conduction region of the MOSFET switches SM1-SM6 (e.g., not through the MOSFET body diodes).

For generating mode, the operation is reversed and power flows in the direction of arrow B. One approach would be to open switches SM1-SM6 and let the voltage produced by the generator 100 be converted to V_{DC} by flowing through the MOSFET body diodes BD1-BD6. Herein, it shall be understood that corresponding body diodes are part of the corresponding MOSFET switch SM1-SM6.

However, in embodiments herein, to reduce losses through the body diodes BD1-BD6, when the current through a particular switch associated with a particular phase can be made to conduct to bypass the body diode. As noted above, SM1 and SM2 are associated with phase A, SM3 and SM4 are associated with phase B and SM5 and SM6 are associated with phase C. To that end, each phase includes a current sensor 410a, 410b, 410c that measures current in the associated phase.

When the current is above a threshold, the efficiency can be greatly improved by activating the (SiC) MOSFET switches (SM1-SM6) in generate mode, with the MOSFET channel conducting in reverse direction (3^{rd} quadrant) instead of the associated body diodes DB1-DB6. The MOSFET channel on-state voltage is typically much lower than the body diode on-state voltage, resulting in much lower on-state (conduction losses), and hence the higher efficiency. Lower losses also help reduce thermal management needs, allowing weight/size reduction critical to aerospace applications.

In more detail, in one embodiment, during generate mode, the switches SM1-SM6 are actively controlled to provide alternate conducting path from the body diodes with much lower losses. This can be accomplished by first opening the switches. Then, using the current sensors, current through the body diodes can be detected. When the current exceeds a threshold (e.g., 10 to 25% of application requirement) the associated switch SM1-S6 is made conductive and provides a parallel and lower loss conduction path. The switching devices will remain active when the forward current is greater than a I₁. Of course, threshold polarity is negative for the SM2, SM4 and SM6 switches.

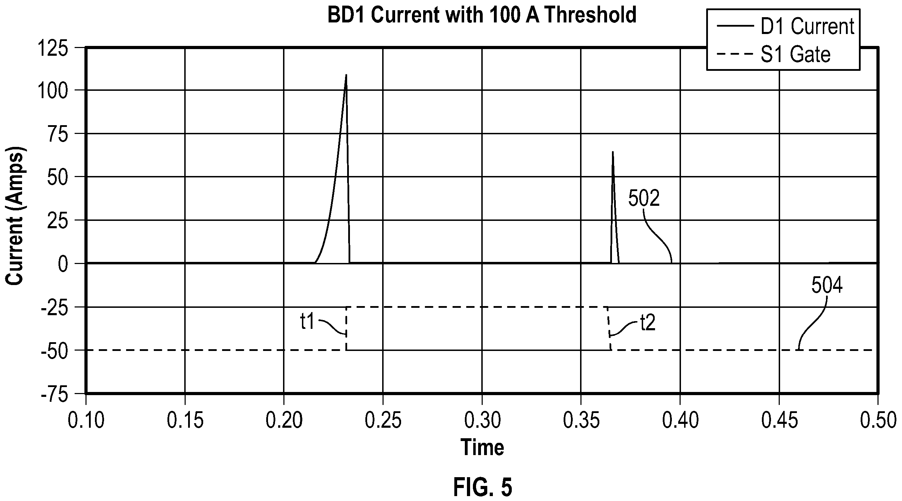

For more clarity, reference is made to FIGs. 5-7 which show current waveforms for BD1 and SM1 with a generator current peak of 425 amps and an I₁ threshold of 100 A. Of course, other currents/thresholds could be utilized.

In FIG. 5, the current (trace 502) through the body diode DB 1 is shown relative to the gate signal (trace 504) for SM1. In the following discussion, the currents are shown in amps and the gate signal is a dimensionless quantity used to illustrate timing. The low and high values of the gating signal can vary, for example, from 0 to 15V.

Consider the case where the threshold is 100A. Current through the body diode (BD1) initially rises to that level (time t1) and then, due to control by the controller 240, the gate is activated and current through the body diode drops substantially (to zero or almost zero), as the current transfers to the switch channel. Then, when current through the switch SM1 falls below 100A, the gate is deactivated (time t2) and the body diode BD1 resumes conduction of the current, and quickly falls as the voltage in phase A falls.

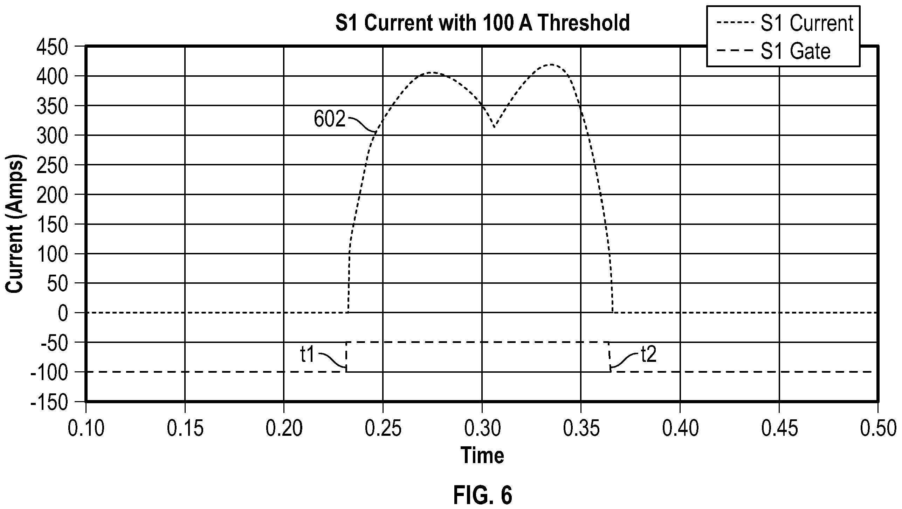

FIG. 6 shows the current (trace 602) through the conduction path of the switch SM1 between time t1 and t2. After the gate is activated, the current through the conduction region of the switch SM1 increases in an almost step function manner and then goes back almost instantly to 0 when the current falls below to the threshold and the gate is deactivated (e.g., current returns to passing through the body diode).

With further reference to FIG. 4, the controller 240 receives currents from the current sensors 410a, 410b, 410c. The controller 240 can include logic 242 for each phase that implements the above described control scheme. For example, the logic 242a can determine for phase A when the current is above the threshold (I₁). This can occur during the positive half wave of the AC voltage produced by the generator 100 in phase A is applied across SM1. When the threshold is exceeded, the logic 242 will cause the gate driver 244 to cause switch SM1 to conduct. Similarly, the logic 242a can determine for phase A when the current falls below the threshold (I₁), to make switch SM1 non-conductive. As noted in FIG. 4, when I_{gen_PHA} > I₁; SM1 is on and when I_{gen_PHA} < I₁; SM1 is off.

Similar operations happen for the negative portion (half wave) of the phase current. For example, the logic 242a can determine for phase A when the current is below the negative level of the threshold (-I₁). When that happens, the logic will cause the gate driver 244 to cause switch SM2 to conduct. Similarly, the logic 242a can determine for phase A when the current rises above the negative threshold (-I₁), to make switch SM2 non-conductive. As noted in FIG. 4, when I_{gen_PHA} < -I1; S2 is on (conducting) and when I_{gen_PHA} > -I1; S2 is off (not conducting). This also applies for all phases.

The above assumes that the controller 240 can be operated in both generate and motor modes. In the generate mode, the controller 240 causes the converter 200 to operate as above. In the motor mode, the controller 240 causes the converter 200 to operate as an inverter.

As can be observed from the above, embodiments are directed to providing, during a generate mode, an alternate (parallel) path that allows the body diode of the MOSFET to be bypassed when the current through it exceeds a threshold. The path is provided through the conduction channel of the MOSFET.

Embodiments disclosed herein can reduce the losses of the three phase rectification used in generate mode and thereby increase the overall system efficiency. It will allow for the use of smaller more efficient power modules thus reducing the size and weight of the inverter/rectifier system employed in a motor-drive/DC generator power application.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention as defined by the appended claims. In addition, many modifications may be made to adapt a particular situation or material to the teachings of the invention without departing from the essential scope of the claims. Therefore, it is intended that the invention not be limited to the particular embodiment(s) described herein, but that the present invention will include all embodiments falling within the scope of the claims.

## Claims

1. A power converter assembly, the assembly comprising:
a power converter (400) that includes an alternating current, AC, port (404) and a direct current, DC, port (406), wherein the AC port is configured to receive AC power and the DC port is configured to output DC power, the power converter comprising:
a plurality of MOSFET switches (SM1-SM6) that each include a body diode (BD1-BD6) coupled between the AC port and the DC port;
a first phase sensor (410a, 410b, 410c) configured to sense a current through a phase of the AC power provided at the AC port; and
a controller (240) connected to the first phase sensor and configured to drive gates of the plurality of MOSFET switches;
wherein the controller is further configured to:
determine that current through the body diode (BD1) of a first switch (SM1) of the plurality of MOSFET switches exceeds a threshold;
after determining that current through the body diode of the first switch of the plurality of MOSFET switches exceeds the threshold, command a gate of the first switch to allow conduction through a conduction region of the first switch;
determine that current through the first switch has fallen below the threshold; and
command the gate of the first switch to cease conduction through the conduction region of the first switch.

2. The assembly of claim 1, wherein determining that current through the body diode of the first switch exceeds the threshold is based on current measured by the first phase sensor.

3. The assembly of claim 1 or 2, wherein the controller is further configured to:
determine that current through the body diode (BD2) of a second switch (SM2) of the plurality of MOSFET switches is below a negative threshold;
after determining that current through the body diode of the second switch of the plurality of MOSFET switches is below the negative threshold, command a gate of the second switch to allow conduction through a conduction region of the second switch;
determine that current through the second switch has risen above the negative threshold; and
command the gate of the second switch to cease conduction through the conduction region of the second switch.

4. The assembly of claim 3, wherein the first (SM1) and second (SM2) switches are connected in series across the DC port (406).

5. The assembly of claim 3 or 4, wherein the threshold is I₁ and the negative threshold is -I₁; and/or
wherein the first and second MOSFETs are SiC MOSFETs.

6. The assembly of any of claims 3 to 5, wherein the plurality of MOSFET switches includes third (SM3) and fourth (SM4) switches and the controller is further configured to:
determine that current through a body diode (BD3) of the third switch (SM3) exceeds the threshold;
after determining that current through the body diode of a third switch exceeds the threshold, command a gate of the third switch to allow conduction through a conduction region of the third switch;
determine that current through the third switch has fallen below the threshold; and
command the gate of the third switch to cease conduction through the conduction region of the third switch.

7. The assembly of claim 6, the controller is further configured to:
determine that current through the body diode (BD4) of the fourth switch (SM4) is below the negative threshold;
after determining current through the body diode of the fourth switch is below the negative threshold, command a gate of the fourth switch to allow conduction through a conduction region of the fourth switch;
determine that current through the fourth switch has risen above the negative threshold; and
command the gate of the fourth switch to cease conduction through the conduction region of the fourth switch.

8. The assembly of claim 7, wherein the third (SM3) and fourth (SM4) switches are connected in series across the DC port (406) and are both SiC MOSFETs; and/or
wherein the threshold is I₁ and the negative threshold is -I₁.

9. A method of converting AC power to DC power with a power converter assembly, the method comprising:
receiving alternating current, AC, power at an AC port (404) of a power converter (400);
sensing current with first phase sensor (410a, 410b, 410c) a phase of the AC power provided at the AC port;
based on the sensed current, causing a plurality of MOSFET switches (SM1-SM6) that each include a body diode (BD1-BD6) to be switched off and on to convert the AC power to DC power, wherein causing includes:
determining that current through the body diode (BD1) of a first switch (SM1) of the plurality of MOSFET switches exceeds a threshold;
after determining that current through the body diode of a first switch of the plurality of MOSFET switches exceeds the threshold, commanding a gate of the first switch to allow conduction through a conduction region of the first switch;
determining that current through the first switch has fallen below the threshold; and
commanding the gate of the first switch to cease conduction through the conduction region of the first switch.

10. The method of claim 9, wherein determining that current through the body diode of the first switch exceeds the threshold is based on current measured by the first phase sensor.

11. The method of claim 9 or 10, further comprising:
determining that a current through the body diode (BD2) of a second switch (SM2) of the plurality of MOSFET switches is less than a negative threshold;
after determining that current through the body diode of the second switch of the plurality of MOSFET switches is less than a negative threshold, commanding a gate of the second switch to allow conduction through a conduction region of the second switch;
determining that current through the second switch has risen above the negative threshold; and
commanding the gate of the second switch to cease conduction through the conduction region of the second switch.

12. The method of claim 11, wherein the first and second switches are connected in series across the DC port; and/or
wherein the threshold is I₁ and the negative threshold is -I₁; and/or
wherein the first and second MOSFETs are SiC MOSFETs.

13. The method of claim 11 or 12, wherein the plurality of MOSFET switches includes third (SM3) and fourth (SM4) switches and the method further includes:
determining that current through the body diode (BD3) of the third switch (SM3) exceeds the threshold;
after determining that current through the body diode of a third switch exceeds the threshold, command a gate of the third switch to allow conduction through a conduction region of the third switch;
determining that current through the third switch has fallen below the threshold; and
commanding the gate of the third switch to cease conduction through the conduction region of the third switch.

14. The method of claim 13, further comprising:
determining that a current through the body diode (BD4) of the fourth switch (SM4) is less than a negative threshold;
after determining current through the body diode of the fourth switch is less than the negative threshold, commanding a gate of the fourth switch to allow conduction through a conduction region of the fourth switch;
determining that current through the fourth switch has risen above the negative threshold; and
commanding the gate of the fourth switch to cease conduction through the conduction region of the fourth switch.

15. The method of claim 14, wherein the third and fourth switches are connected in series across the DC port and are both SiC MOSFETs; and/or
wherein the threshold is I₁ and the negative threshold is -I₁.
